# EUROPÄISCHE PATENTSCHRIFT

(11) **EP 2 463 188 B1**
(45) Veröffentlichungstag und Bekanntmachung des Hinweises auf die Patenterteilung: **11.05.2016**
(21) Anmeldenummer: 11008811.9
(22) Anmeldetag: 05.11.2011
(51) Int. Cl.: B62M 9/10

(54) **Mehrfach-Kettenradanordnung für ein Fahrrad**
Multiple-chain wheel assembly for a bicycle
Agencement de roue d'entraînement multiple pour un vélo

(30) Priorität: 07.12.2010 DE 102010053597
(43) Veröffentlichungstag der Anmeldung: 13.06.2012
(73) Patentinhaber: SRAM Deutschland GmbH, 97424 Schweinfurt (DE)
(72) Erfinder: Braedt, Henrik, 97218 Gerbrunn (DE)

(56) Entgegenhaltungen:
- DE-A1-102008 048 371
- US-A1- 2006 058 140
- US-A1- 2008 234 082

## Beschreibung

Die Erfindung betrifft ein Mehrfach-Kettenzahnrad mit unterschiedlich großen Zahnkränzen zur Aufnahme einer Kette und zur Übertragung einer von dieser eingeleiteten Umfangkraft auf eine Nabe eines Hinterrades eines Fahrrades mit der Möglichkeit, die Kette durch eine Schalteinrichtung von einem auf einen anderen Zahnkranz zu wechseln, wobei im Übergangsbereich von einem Zahnkranz zum nächst größeren Zahnkranz jeweils ein gedachtes ringförmiges Funktionselement angeordnet ist.

Bei Mehrfach-Kettenzahnrädern der herkömmlichen Art wird eine Kassette, bestehend aus einer Vielzahl von Zahnkränzen mit unterschiedlichen Durchmessern auf einem Antreiber einer Nabe angeordnet. Die Zähne eines jeden Zahnkranzes kommen beim Betätigen der Schalteinrichtung abwechselnd in Eingriff mit der Kette und übertragen ein Drehmoment aus den Pedalkräften des Fahrers auf den Antreiber über ein Profil, das die Zahnkränze mit dem Antreiber drehfest verbindet. Jeder dieser Zahnkränze überträgt also individuell das Drehmoment auf den Antreiber, wodurch es sowohl im Bereich der Mitnahme am Profil des Mitnehmers, als auch am Zahnkranz wegen der seitlich wirkenden Kräfte durch die meist nicht fluchtende Kette stärker und schwerer ausgebildet sein muss.

Zur Erfüllung unterschiedlicher Anforderungen, zum Beispiel im Radrennsport nach einer immer leichteren Bauweise, oder infolge gestiegener Genauigkeitsanforderung in Verbindung mit einer weiteren Erhöhung der Anzahl der Gangstufen, ist der Ansatz zu einer einstückigen Bauweise von Mehrfach-Ritzelanordnungen umgesetzt worden.

So ist aus der US 2008/0230344 eine Mehrfach-Ritzelanordnung bekannt geworden, bei der die Einzelritzel in einer konischen Stützstruktur angeordnet sind, bei der sich rohrförmige und scheibenförmige Abschnitte treppenförmig abwechseln und bei der die Einzelritzel durch einen scheibenförmigen Abschnitt und an dessen Peripherie angeordneten Zähnen zum Eingriff mit der Rollenkette gebildet sind. Die Stützstruktur lässt sich mit sehr geringer Wandstärke ausbilden, die vor allem durch die Fertigungstoleranzen nach unten begrenzt ist. Die Stabilität ist durch die abwechselnden aneinander gereihten rohr- und scheibenförmigen Abschnitte größer als bei einer durchgängig konischen Stützstruktur mit der gleichen geringen Wandstärke.

In der DE 10 2008 010 904 ist ein Ansatz gewählt, dass Öffnungen in die treppenförmige und insgesamt konische Stützstruktur an den Stellen eingearbeitet sind, wo nur geringere Lasten ausgehend von einer Eingriffskraft an einem Zahn zu benachbarten Abschnitten der Stützstruktur zu übertragen ist. Es ergibt sich eine Stegstruktur mit Stegen ausgehend von einem Zahn eines kleineren Ritzels hin zum benachbarten Einzelritzel, das wiederum aus einem scheibenförmigen Abschnitt und den Zähnen besteht. Der größte Zahnkranz in der Form eines Abschlussritzels, das das Drehmoment weitergibt zur Übertragung auf die Nabenhülse und der konische Zahnkranz-Hohlkörper werden zu einer Einheit montiert, die sich direkt oder indirekt gegenüber der Nabenachse drehbar abstützt.

In der US 2008/0234082 A1 sind zusätzlich zu der Offenbarung in der US 2008/0230344 noch Ausnehmungen zur Aufnahme der Kette beim Schalten gezeigt, die die Integrität der Stützstruktur nicht gefährden.

Den Stand der Technik nach dem Oberbegriff des Anspruchs 1 stellt hier das Dokument US2008/234082 dar. Es hat sich nunmehr gezeigt, dass unter bestimmten Bedingungen Stützstrukturen zwischen benachbarten Einzelritzeln ohne Öffnungen, aber mit minimaler Wandstärke der Stützstruktur, die optimale Lösung in Hinsicht auf geringes Gewicht und gute Herstellbarkeit darstellen. Bei anderen Bedingungen sind Stützstrukturen mit Öffnungen die optimale Lösung, wobei Stege zwischen den Einzelritzelabschnitten vorhanden sind und sich eine Stegstruktur ergibt. Zu den angesprochenen Bedingungen gehören die Zähnezahldifferenzen zu den benachbarten Ritzeln, die Zähnezahlen der Ritzel sowie die axiale Position, an der sich das betreffende Einzelritzel in der Mehrfach-Ritzelanordnung befindet.

In der Mehrfach-Ritzelanordnung entsprechend der Erfindung sind sowohl Stützstrukturen mit minimal möglicher Wandstärke und ohne Öffnungen, als auch Stützstrukturen mit deutlich größerer Wandstärke und mit Öffnungen miteinander kombiniert. Ausführungen, in denen die größere Wandstärke etwa doppelt so groß ist wie die geringere Wandstärke, sind eine besonders vorteilhafte Ausführungsform, die ein extrem geringes Gewicht mit ausreichender Festigkeit und Stabilität in Einklang bringt.

Die bevorzugte Ausführungsform der erfindungsgemäßen Mehrfach-Ritzelanordnungen wird im Folgenden an Hand der Figuren beschrieben.
- Fig. 1: zeigt die Gesamtansicht einer bevorzugten Ausführungsform einer erfindungsgemäßen Mehrfach-Ritzelanordnung mit konischem Tragkörper und Abschlussritzel in perspektivischer Ansicht.
- Fig. 2: zeigt einen Schnitt parallel zur Mittelachse M durch den konischen Tragkörper der erfindungsgemäßen Mehrfach-Ritzelanordnung nach Fig. 1, in dem Abschnitte sowohl mit geringer Wandstärke und ohne Öffnungen, als auch Abschnitte mit größerer Wandstärke und mit mehreren, eine Stegstruktur ergebenden benachbarten Öffnungen ersichtlich sind.
- Fig. 3: zeigt eine perspektivische Innenansicht des Tragkörpers gemäß Fig. 2.
- Fig. 4: zeigt einen Ausschnitt der Elemente der Tragstruktur, bei der ein Steg zum benachbarten größeren Ritzel angeordnet ist.
- Fig. 5: zeigt die Gesamtansicht einer erfindungsgemäßen Mehrfach-Ritzelanordnung mit Abschlussritzel in perspektivischer Ansicht.
- Fig. 6: zeigt einen Schnitt durch die Mehrfach-Ritzelanordnung gemäß Fig. 5, die mit einer Distanzhülse und einem kleinen Einzelritzel montiert ist.
- Fig. 7: zeigt eine Detail-Ansicht der Mehrfach-Ritzelanordnung gemäß Fig. 6
- Fig. 8: zeigt eine Ansicht der Verbindungsstelle zwischen Abschlussritzel und konischer Tragstruktur, die einen dünnwandigen Tragring zum Abschlussritzel hin aufweist.
- Fig. 9: zeigt Öffnungen an der Tragstruktur, die durch eine Fräsoperation mit einem Fingerfräser entstehen.

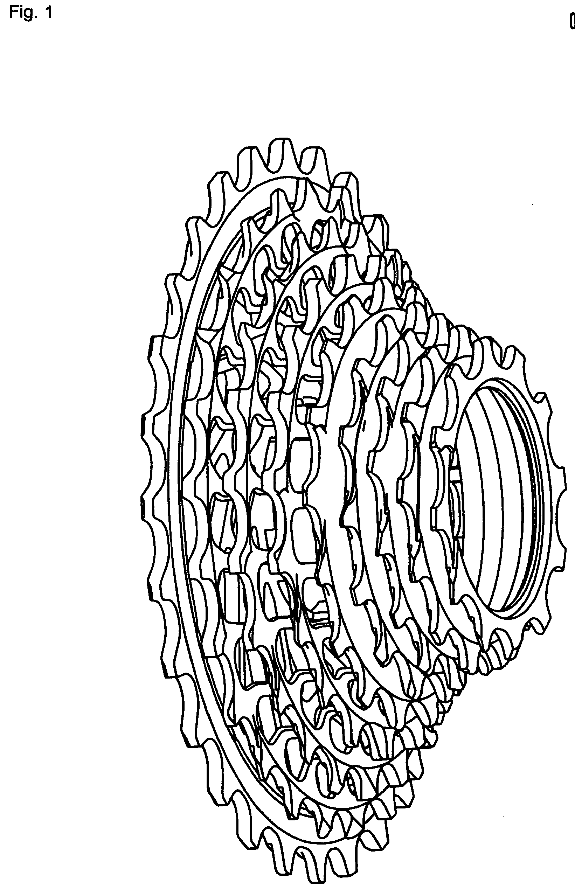

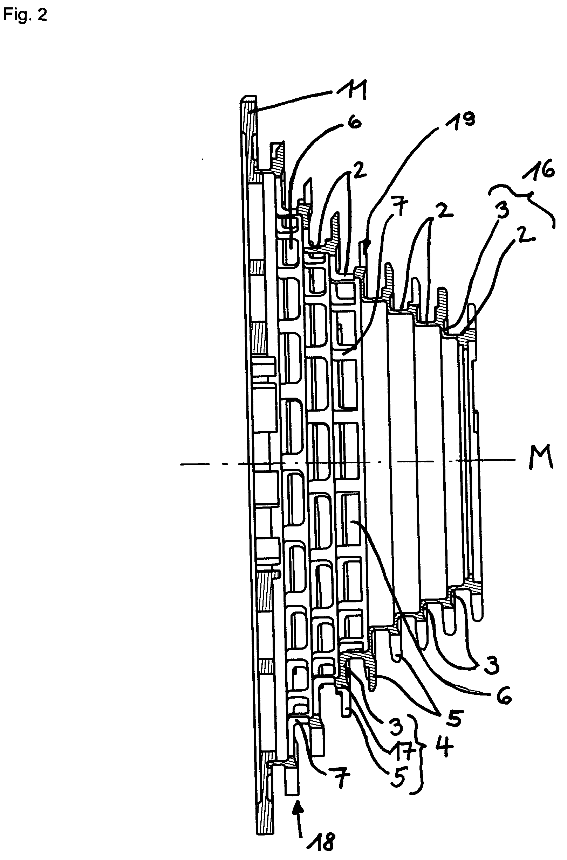

In den Fig. 1 und 2 ist die Mehrfach-Kettenradanordnung gezeigt, die über eine konische Tragstruktur 1 verfügt, die aus einer Aneinanderreihung von Verbindungsabschnitten 16 gebildet wird und an der Zähne 5 an verschiedenen axialen Positionen angeordnet sind. Die geometrische Achse der Tragstruktur 1 entspricht auch der Achse ihrer Drehbewegung während des Gebrauchs. Jeder Verbindungsabschnitt 16 stellt eine Verbindung zwischen den Zähnen 5 verschiedener axialer Positionen her und besteht jeweils aus einem rohrförmigen Abschnitt 2 und einem unmittelbar benachbarten scheibenförmigen Abschnitt 3. Der sich einstellende treppenförmige Querschnitt der Aneinanderreihung von Verbindungsabschnitten 16 ist in der Fig. 2 zu erkennen. Die Zusammenfassung von einem rohrförmigen Abschnitt 2 und Zähnen 5 an derselben axialen Position sowie einem zwischen diesen Zähnen 5 und dem rohrförmigen Abschnitt 2 angeordneten Zahnfußring 17 wird als Einzelritzel 4 aufgefasst. Der Zahnfußring hat im Wesentlichen eine Erstreckung in axialer Richtung wie die Zähne 5.

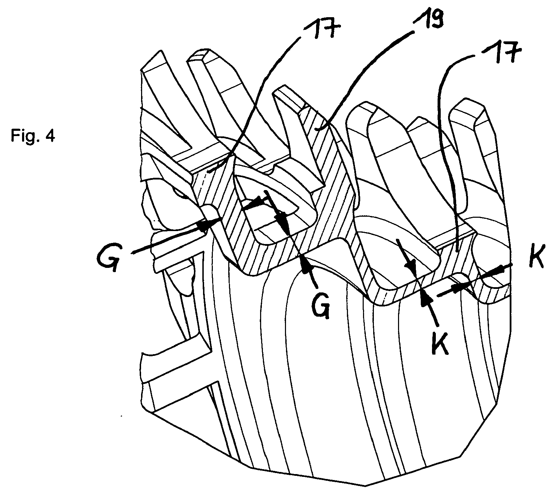

Wie aus den Figuren 2 und 4 ersichtlich ist, haben die Bestandteile der konischen Tragstruktur 1 mit Öffnungen 6 eine große Wandstärke G, während die konische Tragstruktur 1 ohne Öffnungen 6 eine kleine Wandstärke K aufweist. Da in der dargestellten bevorzugten Ausführungsform in Fig. 2 die Öffnungen 6 jeweils durch den rohrförmigen Abschnitt 2 und den scheibenförmigen Abschnitt 3 an derselben Umfangs-Position eingearbeitet sind, ergeben sich Stege 7, die an den Positionen von Zähnen 5 am jeweils kleineren Einzelritzel 4 entspringen und im Wesentlichen an derselben Umfangsposition zum benachbarten größeren Einzelritzel 4 verlaufen. Dadurch wird eine Stegstruktur gebildet. Es hat sich in Hinsicht auf ein geringes Gewicht bei ausreichender Tragfähigkeit gezeigt, dass sich besonders günstige Verhältnisse ergeben, wenn die große Wandstärke G doppelt so groß ist wie die kleine Wandstärke K.

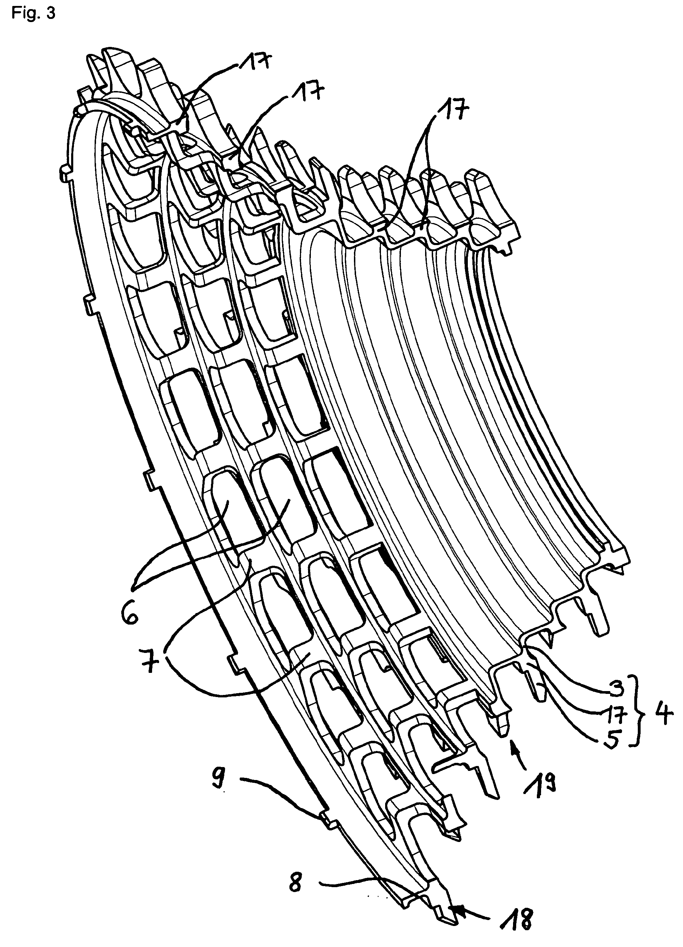

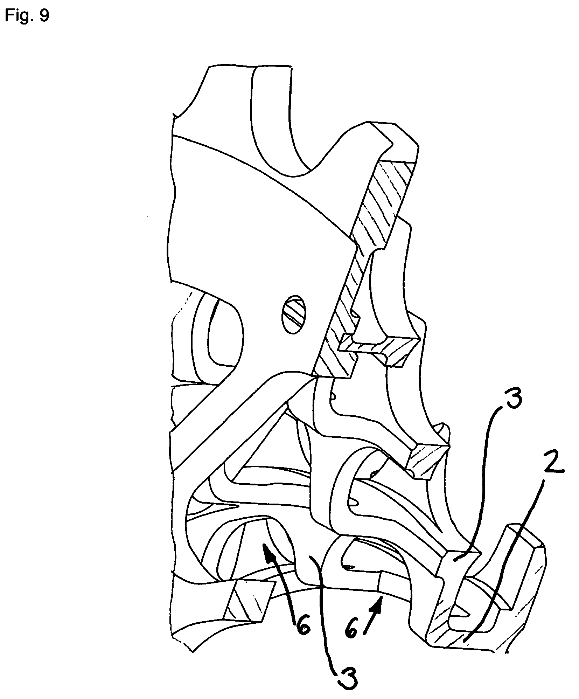

Die sich einstellende Gewichtsersparnis wächst mit der Größe der Öffnungen und nimmt demzufolge zu, wenn Öffnungen sowohl im rohrförmigen Abschnitt 2, als auch im scheibenförmigen Abschnitt 3 eingearbeitet sind und somit Stege 7 ausgebildet sind, wie in Fig. 3 gut zu erkennen ist. Aber auch Ausführungen, in denen lediglich der rohrförmige Abschnitt 2 oder der scheibenförmige Abschnitt 3 Öffnungen aufweist, erfüllen die Zielsetzung eines geringeren Gewichts. Die mit dem Konzept großer Wandstärke in Kombination mit Öffnungen erzielbare Gewichtsersparnis ist dann besonders groß, wenn die Zähnezahldifferenz in dem betreffenden Verbindungsabschnitt 16 groß ist und das größere Einzelritzel 4 mindestens zwei Zähne mehr aufweist, als das benachbarte kleinere Einzelritzel 4. Beträgt die Zähnezahldifferenz lediglich einen Zahn, ist die mit einem Einarbeiten von Öffnungen 6 erzielbare Gewichtsersparnis nicht so groß, und eine Ausbildung eines Verbindungsabschnittes ohne Öffnungen und mit geringerer Wandstärke ist günstiger und lässt sich auch einfacher herstellen. Bei einem Einarbeiten von Öffnungen mittels Fräsoperationen wird ein Fingerfräser eingesetzt, der nach radial außen bewegt wird. Der Durchmesser dieses Fräsers ist an Hand der Abrundungen der Öffnungen 6 in Fig. 9 erkennbar. Ist bei einer Zähnezahldifferenz von einem Zahn der scheibenförmige Abschnitt 3 nur sehr kurz, also deutlich kürzer als in Fig. 9, führt der Einsatz eines Fräsers mit größerem Durchmesser dazu, dass gar nicht mehr alles das Material abgetragen wird, was bei der Erfüllung ausreichender Festigkeit abgetragen werden könnte. Wird dagegen ein Fräser mit kleinem Durchmesser eingesetzt, ist dieser Fräser nur mit geringer Geschwindigkeit nach radial außen zu bewegen, andernfalls würden die Belastungen auf den Fräser zu groß.

Obwohl im dargestellten bevorzugten Ausführungsbeispiel Öffnungen stets gleichermaßen im rohrförmigen Abschnitt 2 und auch im scheibenförmigen Abschnitt 3 eingearbeitet sind, können auch Öffnungen lediglich im rohrförmigen Abschnitt 2 oder im scheibenförmigen Abschnitt 3 eingearbeitet sein, um eine Gewichtsersparnis zu erreichen. Die Wandstärke ist dann wiederum dort etwa doppelt so groß zu wählen, wo Öffnungen eingearbeitet sind, im Vergleich zu dem Bestandteil des betreffenden Verbindungsabschnittes 16, wo keine Öffnungen 6 vorliegen.

Als Übergangsritzel 19 wird dasjenige Einzelritzel 4 bezeichnet, dessen Verbindungsabschnitt 16 zum nächst kleineren Einzelritzel keine Öffnungen aufweist, und dessen Verbindungsabschnitt zum nächst größeren Einzelritzel 4 Öffnungen aufweist, wie in Fig. 4 gezeigt. Generell weist eine Mehrfach-Kettenradanordnung in der Regel zunächst kleine Einzelritzel mit geringen Zähnezahldifferenzen zu den benachbarten Ritzeln auf, während bei den größeren Ritzeln größere Zähnezahldifferenzen vorliegen Es hat sich als vorteilhaft gezeigt, dass bei einer erfindungsgemäßen Mehrfach-Kettenradanordnung das erste Einzelritzel 4, das eine Zähnezahldifferenz von mehr als einem Zahn zum nächst größeren Einzelritzel 4 aufweist, nicht als Übergangsritzel 19 ausgebildet wird, sondern erst das Einzelritzel 4, bei dem in der Abfolge von Einzelritzeln 4 erstmalig sowohl zum nächst kleineren, als auch zum nächst größeren Einzelritzel eine Zähnezahldifferenz von mehr als einem Zahn vorliegt. Mit dieser Gestaltung ist eine hinreichend gute Weiterleitung von Kräften zwischen Bestandteilen der Verbindungsabschnitte 16 mit Öffnung 6 zu Bestandteilen der Verbindungsabschnitte 16 ohne Öffnung gegeben.

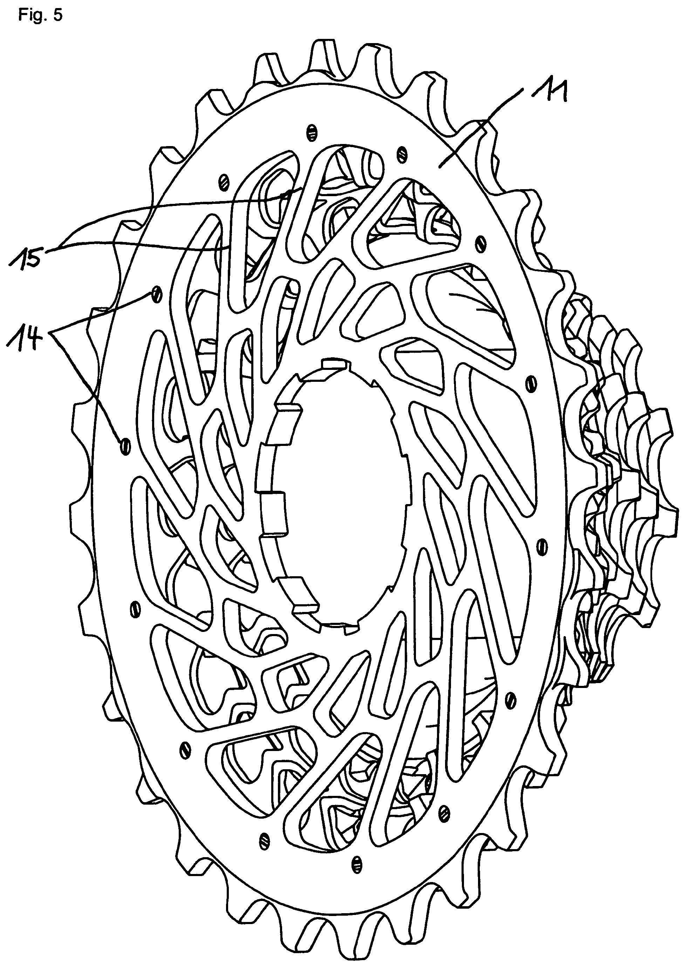

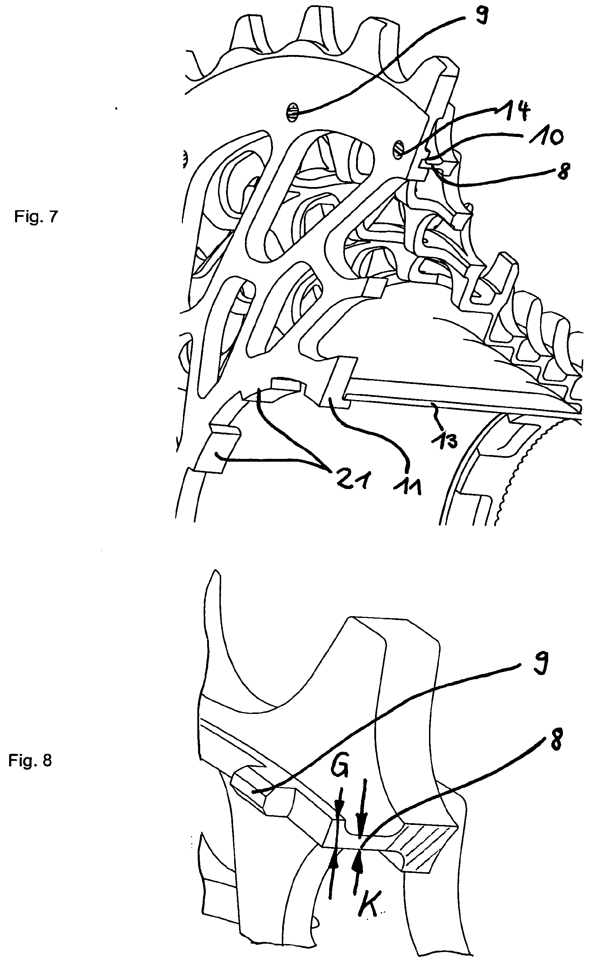

Ein Abschlussritzel 11 ist mit dem größten Einzelritzel 4 an der konischen Tragstruktur 1 verbunden, wie in Fig. 5 dargestellt. Dieses Abschlussritzel 11 dient sowohl der Abstützung der Mehrfach-Kettenradanordnung gegenüber der nicht dargestellten Nabenachse, als auch der Weiterleitung des über eine an den Zähnen eines Einzelritzels 4 in die konische Tragstruktur 1 eingeleiteten Drehmomentes bis hin zur angetriebenen, nicht dargestellten Nabenhülse. Für eine sichere und trotzdem einfache Verbindung zwischen konischer Tragstruktur 1 und Abschlussritzel 11 sorgt ein vom größten Einzelritzel 4 axial vorstehender Tragring 8, der in eine Ringnut 10 am Abschlussritzel 11 eingreift, in Verbindung mit am Tragring 8 angeordneten Montagevorsprüngen 9, die in Aufnahmebohrungen 14 am Abschlussritzel 11 eingefügt sind. Der Tragring 8 weist keine Öffnungen auf und verfügt bis zu seinem axialen Abschnitt, der in die Ringnut 10 am Abschlussritzel 11 eingreift, über eine geringe Wandstärke, wie in den Fig. 7 und 8 ersichtlich ist. Der Tragring 8 folgt damit dem Prinzip der erfindungsgemäßen Mehrfach-Kettenradanordnung.

Die Montagevorsprünge 9 übertragen des Drehmoment von der konischen Tragstruktur 1 auf das Abschlussritzel 11 und müssen dementsprechend dimensioniert sein, damit keine zu großen Flächenpressungen an den Kontaktstellen entstehen. Da die Montagevorsprünge 9 aus dem Tragring 8 herausgearbeitet sind, bestimmt die Wandstärke des in die Ringnut 10 eingreifenden Bereichs des Tragringes 8 die Größe der Kontaktfläche zu jeder der Aufnahmebohrungen 14. Deshalb ist der in die Ringnut 10 eingreifende Abschnitt des Tragringes 8 mit einer größeren Wandstärke G ausgelegt.

Die Anzahl der Montagevorsprünge 9 ist geringer als die Zahl der am größten Einzelritzel 4 angeordneten Zähne 5. Sie sind in Umfangsrichtung dort angeordnet, wo das Abschlussritzel 11 Verbindungsarme 15 nach radial innen in Richtung von Mitnahmeprofilen 21 aufweist, die der Weiterleitung des Drehmomentes dienen.

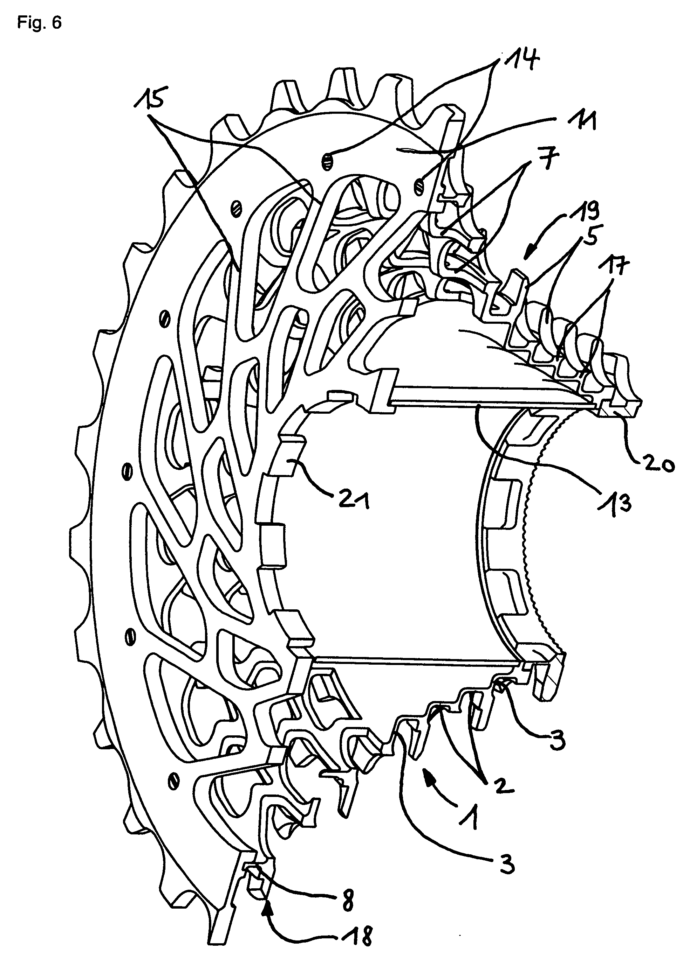

Für die Montage der Mehrfach-Kettenradanordnung an einer Nabenhülse werden neben der konischen Tragstruktur 1 und dem Abschlussritzel 11 noch eine Distanzhülse 13 und ein Verspann-Ritzel 20 eingesetzt, wie in Fig. 6 dargestellt. Das Verspann-Ritzel 20 wird durch eine nicht dargestellte Abschluss-Schraube in axialer Richtung gegenüber einem nicht dargestellten Anschlag für das Abschlussritzel 11 vorgespannt und drückt die gesamte Mehrfach-Kettenradanordnung an den Anschlag, um diese in axialer Richtung zu fixieren. Nach einer geringen Deformation der konischen Tragstruktur 1 in axialer Richtung, kommt es zur Anlage und Kraftübertragung an einer Distanzhülse 13, die zwischen Abschlussritzel 11 und kleinstem Einzelritzel 4 angeordnet ist. Damit wird die konische Tragstruktur nicht zu großen axialen Kräften ausgesetzt.

### Bezugszeichen

- 1: konische Tragstruktur
- 2: rohrförmiger Abschnitt
- 3: scheibenförmiger Abschnitt
- 4: Einzelritzel
- 5: Zahn
- 6: Öffnung
- 7: Steg
- 8: Tragring
- 9: Montagevorsprung
- 10: Ringnut
- 11: Abschlussritzel
- 12: Anschlag
- 13: Distanzhülse
- 14: Aufnahmebohrung
- 15: Verbindungsarm
- 16: Verbindungsabschnitt
- 17: Zahnfußring
- 18: größtes Einzelritzel
- 19: Übergangsritzel
- 20: Verspann-Ritzel
- 21: Mitnahmeprofil

- G: große Wandstärke
- K: kleine Wandstärke
- M: Mittelachse

## Patentansprüche

1. Mehrfach-Kettenradanordnung an einem Hinterrad eines Fahrrades mit einer aus einem einzigen Stück gefertigten, konischen Tragstruktur (1) mit einer Mittelachse (M), die der Drehachse der Mehrfach-Kettenradanordnung entspricht, bei der rohrförmige Abschnitte (2) und scheibenförmige Abschnitte (3) abwechselnd aneinander gereiht sind und einen treppenförmigen Querschnitt bei einem Schnittverlauf durch die Mittelachse (M) aufweisen,
wobei Zähne (5) für den Eingriff einer Rollenkette und ein Zahnfußring (17) an der äußeren Peripherie des scheibenförmigen Abschnittes (3) angeordnet sind und gemeinsam mit dem scheibenförmigen Abschnitt (3) ein Einzelritzel 4 bilden;
und wobei ein rohrförmiger Abschnitt (2) und ein benachbarter scheibenförmiger Abschnitt (3) einen Verbindungsabschnitt (16) darstellen, in den Öffnungen (6) eingearbeitet sind,
**dadurch gekennzeichnet,**
**dass** in den Verbindungsabschnitten (16) Öffnungen (6) eingearbeitet sind, bei denen eine große Wandstärke (G) vorliegt und dass mindestens ein Verbindungsabschnitt (16) der konischen Tragstruktur (1) eine kleine Wandstärke (K) aufweist.

2. Mehrfach-Kettenradanordnung nach Anspruch 1,
**dadurch gekennzeichnet,**
**dass** die große Wandstärke (G) etwa doppelt so groß ist, wie die kleine Wandstärke (K).

3. Mehrfach-Kettenradanordnung nach Anspruch 1 oder 2,
**dadurch gekennzeichnet,**
**dass** an einem Einzelritzel (4), das mindestens zwei Zähne (5) mehr aufweist als das benachbarte kleinere Einzelritzel (4), ein Verbindungsabschnitt (16) zu diesem kleineren Einzelritzel (4) mit großer Wandstärke (G) vorliegt.

4. Mehrfach-Kettenradanordnung nach einem der Ansprüche 1 bis 3,
**dadurch gekennzeichnet,**
**dass** an einem Einzelritzel (4) eine Vielzahl von Öffnungen (6) in den Verbindungsabschnitt (16) zum nächst größeren Einzelritzel (4) eingearbeitet ist.

5. Mehrfach-Kettenradanordnung nach Anspruch 3 oder 4,
**dadurch gekennzeichnet,**
**dass** ausgehend von einer Vielzahl von direkt benachbarten Zähnen (5) eines Einzelritzels (4) Stege (7) mit einem treppenförmigen Querschnitt bei einem Schnittverlauf durch die Mittelachse (M) durch Öffnungen (6) sowohl im rohrförmigen Abschnitt (2), als auch im scheibenförmigen Abschnitt (3) des Verbindungsabschnittes (16) gebildet werden, wobei eine Stegstruktur besteht.

6. Mehrfach-Kettenzahnradanordnung nach Anspruch 1,
**dadurch gekennzeichnet,**
**dass** die konische Tragstruktur (1) ausgehend vom größten Einzelritzel (4) einen am gesamten Umfang axial bis zu einem Abschlussritzel (11) reichenden Tragring (8) kleiner Wandstärke (K) ohne Öffnungen (6) aufweist, wobei sich das Abschlussritzel (11) nach radial innen erstreckt und sich direkt oder indirekt an der Nabenachse abstützt.

7. Mehrfach-Kettenradanordnung nach Anspruch 6,
**dadurch gekennzeichnet,**
**dass** an dem axialen Endbereich des Tragringes (8) Montagevorsprünge (9) vorgesehen sind.

8. Mehrfach-Kettenradanordnung nach Anspruch 7,
**dadurch gekennzeichnet,**
**dass** die Montagevorsprünge (9) in Aufnahmebohrungen (14) in der Nähe von Verbindungsarmen (15) im Abschlussritzel (11) eingreifen.

9. Mehrfach-Kettenradanordnung nach Anspruch 6,
**dadurch gekennzeichnet,**
**dass** der Tragring (8) in eine Ringnut (10) am Abschlussritzel (11) eingreift.

10. Mehrfach-Kettenradanordnung nach Anspruch 6 oder 7,
**dadurch gekennzeichnet,**
**dass** in axialer Richtung das Abschlussritzel (11) an einem Anschlag (12) anliegt, und dass mittels einer am Ende der konischen Tragstruktur (1) mit dem kleinsten Einzelritzel (4) angreifenden Kraft die konische Tragstruktur (1) an der Ringnut (10) sowie radial innen mittels einer Distanzhülse (13) gegen das Abschlussritzel (11) verspannt wird, wobei sich das Abschlussritzel (11) und die konische Tragstruktur (1) elastisch deformieren.

11. Mehrfach-Kettenradanordnung nach einem der Ansprüche 1 bis 3,
**dadurch gekennzeichnet,**
**dass** die große Wandstärke (G) 1 Millimeter mit einer Abweichung nach oben und unten von 0,2 Millimetern beträgt.

12. Mehrfach-Kettenradanordnung nach einem der Ansprüche 1 bis 3,
**dadurch gekennzeichnet,**
**dass** die kleine Wandstärke (K) 0,5 Millimeter mit einer Abweichung nach oben und unten von 0,1 Millimetern beträgt.

13. Mehrfach-Kettenradanordnung nach Anspruch 1 oder 2,
**dadurch gekennzeichnet,**
**dass** an einem Übergangsritzel (19) Öffnungen (6) im Verbindungsabschnitt (16) zum nächst größeren Einzelritzel (4) eingearbeitet sind, und dass der Verbindungsabschnitt (16) zum nächst kleineren Einzelritzel (4) keine Öffnung (6) aufweist.

## Claims

1. Multiple sprocket arrangement on a rear wheel of a bicycle having a conical support structure (1) which is manufactured from a single piece with a centre axis (M) which corresponds to the rotational axis of the multiple sprocket arrangement, in which tubular sections (2) and disc-shaped sections (3) are arranged in a row in an alternating manner and have a step-shaped cross section in a sectional profile through the centre axis (M), teeth (5) for the engagement of a roller chain and a tooth base ring (17) being arranged on the outer periphery of the disc-shaped section (3) and forming a single sprocket (4) together with the disc-shaped section (3); and a tubular section (2) and an adjacent disc-shaped section (3) producing a connecting section (16), in which openings (6) are machined, **characterized in that** openings (6) are machined in the connecting sections (16), in which there is a great wall thickness (G), and **in that** at least one connecting section (16) of the conical support structure (1) has a small wall thickness (K).

2. Multiple sprocket arrangement according to Claim 1, **characterized in that** the great wall thickness (G) is approximately twice as great as the small wall thickness (K).

3. Multiple sprocket arrangement according to Claim 1 or 2, **characterized in that** there is a connecting section (16) to a smaller single sprocket (4) with a great wall thickness (G) on a single sprocket (4) which has at least two more teeth (5) than the adjacent said smaller single sprocket (4).

4. Multiple sprocket arrangement according to one of Claims 1 to 3, **characterized in that**, on a single sprocket (4), a multiplicity of openings (6) are machined into the connecting section (16) to the next larger single sprocket (4).

5. Multiple sprocket arrangement according to Claim 3 or 4, **characterized in that**, starting from a multiplicity of directly adjacent teeth (5) of a single sprocket (4), webs (7) are formed with a step-shaped cross section in a sectional profile through the centre axis (M) through openings (6) both in the tubular section (2) and in the disc-shaped section (3) of the connecting section (16), there being a web structure.

6. Multiple sprocket arrangement according to Claim 1, **characterized in that**, starting from the largest single sprocket (4), the conical support structure (1) has a support ring (8) of small wall thickness (K) without openings (6) which reaches over the entire circumference axially as far as a final sprocket (11), the final sprocket (11) extending radially inwards and being supported directly or indirectly on the hub axle.

7. Multiple sprocket arrangement according to Claim 6, **characterized in that** mounting projections (9) are provided on the axial end region of the support ring (8).

8. Multiple sprocket arrangement according to Claim 7, **characterized in that** the mounting projections (9) engage into receiving bores (14) in the vicinity of connecting arms (15) in the final sprocket (11).

9. Multiple sprocket arrangement according to Claim 6, **characterized in that** the support ring (8) engages into an annular groove (10) on the final sprocket (11).

10. Multiple sprocket arrangement according to Claim 6 or 7, **characterized in that** the final sprocket (11) bears against a stop (12) in the axial direction, and **in that** the conical structure (1) is braced on the annular groove (10) and radially to the inside by means of a spacer sleeve (13) against the final sprocket (11) by means of a force which acts at the end of the conical support structure (1) with the smallest single sprocket (4), the final sprocket (11) and the conical support structure (1) being deformed elastically.

11. Multiple sprocket arrangement according to one of Claims 1 to 3, **characterized in that** the great wall thickness (G) is 1 mm with an upward and downward deviation of 0.2 mm.

12. Multiple sprocket arrangement according to one of Claims 1 to 3, **characterized in that** the small wall thickness (K) is 0.5 mm with an upward and downward deviation of 0.1 mm.

13. Multiple sprocket arrangement according to Claim 1 or 2, **characterized in that** openings (6) are machined on a transition sprocket (19) in the connecting section (16) to the next larger single sprocket (4), and **in that** the connecting section (16) to the next smaller single sprocket (4) does not have an opening (6).

## Revendications

1. Agencement de roues d'entraînement multiples placé au niveau d'une roue arrière d'un vélo avec une structure portante (1) conique fabriquée d'un seul tenant, avec un axe central (M) correspondant à l'axe de rotation de l'agencement de roues d'entraînement multiples, dans lequel les sections (2) en forme de tube et les sections (3) en forme de disque se succèdent tour à tour et présentent une section transversale en forme de marches dans une courbe en coupe pratiquée à travers l'axe central (M) ;
des dents (5) servant à engrener une chaîne à rouleaux et un anneau de pied de dent (17) étant disposés au niveau de la périphérie extérieure de la section (3) en forme de disque et formant ensemble, avec la section (3) en forme de disque, un pignon individuel (4) ; et une section (2) en forme de tube et une section (3) en forme de disque connexe représentant une section de liaison (16) dans laquelle des ouvertures (6) sont pratiquées ;
**caractérisé en ce que** :
des ouvertures (6) sont pratiquées dans les sections de liaison (16), ces ouvertures ayant une grande épaisseur de paroi (G) et au moins une section de liaison (16) de la structure portante (1) conique présentant une petite épaisseur de paroi (K).

2. Agencement de roues d'entraînement multiples selon la revendication 1, **caractérisé en ce que** la grande épaisseur de paroi (G) est approximativement deux fois plus importante que la petite épaisseur de paroi (K).

3. Agencement de roues d'entraînement multiples selon la revendication 1 ou 2, **caractérisé en ce qu'**au niveau d'un pignon individuel (4) qui comporte au moins deux dents (5) de plus que le plus petit pignon individuel (4) connexe, on trouve une section de liaison (16) reliant le plus petit pignon individuel (4) avec la grande épaisseur de paroi (G).

4. Agencement de roues d'entraînement multiples selon l'une quelconque des revendications 1 à 3, **caractérisé en ce qu'**une pluralité d'ouvertures (6) sont pratiquées au niveau d'un pignon individuel (4), dans la section de liaison (16) menant au plus grand pignon individuel (4) suivant.

5. Agencement de roues d'entraînement multiples selon la revendication 3 ou 4, **caractérisé en ce que** des étais (7) avec une section transversale en forme de marches sont formés à partir d'une pluralité de dents (5) directement connexes d'un pignon individuel (4), dans une courbe en coupe traversant l'axe central (M) à travers les ouvertures (6), tant dans la section (2) en forme de tube que dans la section (3) en forme de disque de la section de liaison (16), permettant ainsi de réaliser une structure en étai.

6. Agencement de roues d'entraînement multiples selon la revendication 1, **caractérisé en ce que** la structure portante (1) conique comporte, à partir du plus grand pignon individuel (4), un anneau porteur (8) allant, au niveau de l'ensemble de la périphérie dans le plan axial, jusqu'à un pignon d'extrémité (11) de petite épaisseur de paroi (K) sans ouvertures (6), le pignon d'extrémité (11) s'étendant vers l'intérieur dans le plan radial et s'appuyant directement ou indirectement contre l'axe de moyeu.

7. Agencement de roues d'entraînement multiples selon la revendication 6, **caractérisé en ce que** des saillies de montage (9) sont prévues au niveau de la zone d'extrémité axiale de l'anneau porteur (8).

8. Agencement de roues d'entraînement multiples selon la revendication 7, **caractérisé en ce que** les saillies de montage (9) s'engrènent dans des alésages de réception (14) à proximité des bras de liaison (15), dans le pignon d'extrémité (11).

9. Agencement de roues d'entraînement multiples selon la revendication 6, **caractérisé en ce que** l'anneau porteur (8) s'engrène dans une rainure annulaire (10) au niveau du pignon d'extrémité (11).

10. Agencement de roues d'entraînement multiples selon la revendication 6 ou 7, **caractérisé en ce que** le pignon d'extrémité (11) bute contre une butée (12) et que la structure portante (1) conique est serrée contre le pignon d'extrémité (11), au niveau de la rainure annulaire (10) ainsi que dans le plan radial à l'intérieur au moyen d'une douille d'écartement (13), par le biais d'une force s'engrenant à l'extrémité de la structure portante (1) conique avec le plus petit pignon individuel (4), le pignon d'extrémité (11) et la structure portante (1) conique se déformant de façon élastique.

11. Agencement de roues d'entraînement multiples selon l'une quelconque des revendications 1 à 3, **caractérisé en ce que** la grande épaisseur de paroi (G) est de 1 millimètre avec un écart vers le haut et le bas de 0,2 millimètre.

12. Agencement de roues d'entraînement multiples selon l'une quelconque des revendications 1 à 3, **caractérisé en ce que** la petite épaisseur de paroi (K) est de 0,5 millimètre avec un écart vers le haut et bas de 0,1 millimètre.

13. Agencement de roues d'entraînement multiples selon la revendication 1 ou 2, **caractérisé en ce que** des ouvertures (6) sont pratiquées, au niveau d'un pignon de transition (19), dans la section de liaison (16), vers le plus grand pignon individuel (4) et que la section de liaison (16) ne comporte aucune ouverture (6) conduisant au plus petit pignon individuel (4) suivant.
